# EUROPÄISCHE PATENTSCHRIFT

(11) **EP 1 418 336 B1**
(45) Veröffentlichungstag und Bekanntmachung des Hinweises auf die Patenterteilung: **10.10.2007**
(21) Anmeldenummer: 03025279.5
(22) Anmeldetag: 06.11.2003
(51) Int. Cl.: F04C 2/107, F04C 15/00, F01C 21/10

(54) **Exzenterschneckenpumpe mit integriertem Elektromotor**
Progressive cavity pump with integrated electrical motor
Pompe à vis excentrique avec moteur électrique intégré

(30) Priorität: 07.11.2002 DE 10251846
(43) Veröffentlichungstag der Anmeldung: 12.05.2004
(73) Patentinhaber: Netzsch-Mohnopumpen GmbH, 95100 Selb (DE)
(72) Erfinder: Achleitner, Jürgen, 8010 Graz (AT); Jaberg, Helmut, Prof., 67547 Worms (DE); Ribbe, Thomas, 84453 Mühldorf (DE); Kreidl, Johann, 84478 Waldkraiburg (DE)

(56) Entgegenhaltungen:
- EP-A- 0 357 317
- DE-A- 4 313 442
- DE-C- 686 631

## Beschreibung

### Technisches Gebiet

Die Erfindung betrifft eine Schnecken- bzw. Exzenterschneckenpumpe, wie sie insbesondere zur Förderung von hochviskosen bzw. mit Feststoffen versetzten Medien verwendet wird. Weiterhin betrifft die Erfindung einen Rotor für eine Exzenterschneckenpumpe sowie ein Verfahren zum Betrieb einer Exzenterschneckenpumpe.

### Stand der Technik

Exzenterschneckenpumpen die dem Stand der Technik entsprechen, weisen meist einen feststehenden äußeren Stator und einen darin laufenden Rotor auf. Der Antrieb des Rotors erfolgt meist durch einen externen Elektromotor, welcher mittels einer Gelenk- bzw. Biegewelle mit dem Rotor verbunden ist. In den nachfolgenden Ausführungen wird zwischen Schnecken- und Exzenterschneckenpumpen nicht weiter unterschieden, da dies keine Auswirkungen auf das der Erfindung zugrundeliegende Prinzip hat.

Bekannte Exzenterschneckenpumpen weisen jedoch eine lange Bauform auf und sind aufgrund der hohen Anzahl beweglicher Teile in Motor, Gelenkwelle und Pumpe wartungsbedürftig. Zudem ist bei einer solchen Anordnung auf mindestens einer Seite der Pumpe eine Abdichtung zur Gelenkwelle hin notwendig.

Eine wesentliche Verbesserung stellt hier die Anordnung aus der DE-OS 16 53 869.5 dar. Hierin wird eine Exzenterschneckenpumpe in einen Elektromotor integriert.

Abweichend von der normalen Funktionsweise einer Exzenterschneckenpumpe wird der Rotor in seiner Position fixiert und der Stator durch den Elektromotor gedreht. Weiterhin ist der Stator selbst in den Rotor des Elektromotors integriert. Durch diese Anordnung ergibt sich eine Exzenterschneckenpumpe kurzer Bauform. Allerdings wird aufgrund der Integration in einen Elektromotor der äußere Durchmesser der Anordnung wesentlich größer als der Durchmesser des Motors ohne integrierte Exzenterschneckenpumpe.

Ein weiterer Nachteil dieser Anordnung ist, dass nun an Stelle einer Wellendichtung sogar zwei Wellendichtungen, jeweils eine an jedem Ende der Pumpe, vorzusehen sind. Diese Wellendichtungen sind auch noch aufwändiger und verschleißanfälliger als die Wellendichtungen herkömmlicher Exzenterschneckenpumpen, da sie aufgrund ihrer Funktion zur Abdichtung des äußeren Rohres in der Konstruktion komplexer sind und mit einer höheren Umfangsgeschwindigkeit betrieben werden.

Eine weitere Verbesserung dieser Konstruktion ist in der DE-G 86 17 489.4 offenbart. Hieraus ergibt sich eine Pumpenkonstruktion mit einem deutlich kleineren Außendurchmesser, wobei allerdings wieder die Baulänge vergrößert ist. Das Problem der Dichtungen ist auch hier nicht gelöst.

In der DE 431 34 42A ist eine Pumpe mit einem in einer Achse linear beweglichen Schlauch offenbart. Dieser Schlauch führt eine wellenförmige Bewegung aus, wobei sich zwischen den Wellenbergen Täler ausbilden, die in der Lage sind Flüssigkeit aufzunehmen. Diese Täler pflanzen sich entlang der Pumpe fort und bewirken dadurch einen Flüssigkeitstransport.

In der US 5,631,512 ist ein Schrittmotor mit hartmagnetischen Polen und weichmagnetischen Flusselementen offenbart.

In der DE 686631C ist eine Schraubenpumpe offenbart, bei der sowohl im Rotor als auch im Stator elektrische Wicklungen zur Erzeugung von Magnetfeldern vorgesehen sind.

### Darstellung der Erfindung

Der Erfindung liegt die Aufgabe zugrunde, eine Exzenterschneckenpumpe und ein entsprechendes Antriebsverfahren derart zu gestalten, dass das zum Antrieb der Pumpe benötigte Drehmoment ohne zusätzliche, die Bauform der Pumpe verlängernde Mittel sowie ohne Wellendichtungen und Wellenlagerungen zugeführt werden kann.

Eine erfindungsgemäße Lösung dieser Aufgaben ist in den Patentansprüchen 1, 8 und 9 angegeben. Weiterbildungen der Erfindung sind Gegenstand der abhängigen Ansprüche.

Die erfindungsgemäße Vorrichtung umfasst eine Exzenterschneckenpumpe, bei der das zum Antrieb der Pumpe benötigte Drehmoment mit Hilfe von Magnetfeldern durch die Außenwand der Pumpe in den Rotor eingekoppelt wird. So sind vorzugsweise Antrieb und Fördereinrichtung identisch. Die erfindungsgemäße Vorrichtung weist vorzugsweise einen Stator auf, welcher als Stator eines Elektromotors ausgebildet ist. Der Rotor der Pumpe ist vorzugsweise selbst als Rotor bzw. Läufer eines Elektromotors ausgebildet. Durch eine solche Anordnung sind Antrieb und Pumpe äußerst platzsparend in eine einzige Einheit integriert. Gleichzeitig wird die mechanische Konstruktion wesentlich vereinfacht. So sind keine anfälligen Wellendichtungen notwendig, da der Rotor vollständig abgeschlossen in dem System aus Stator und den angeschlossenen Leitungen läuft. Es wird keinerlei Verbindung bzw. Kontakt vom Rotor zu Punkten außerhalb des Systems benötigt. Damit kann die Pumpe, bestehend aus Rotor und Stator, ohne zusätzliche Verbindungen und Wellendichtungen in eine vorhandene Rohrleitung eingeflanscht werden.

Durch eine erfindungsgemäße Ausgestaltung kann auch das Umwandlungsglied, wie beispielsweise eine Gelenkwelle oder auch Biegewelle für die Transformation der zentrischen Rotation des Antriebsmotors in die exzentrische Bewegung des Rotors entfallen.

Weiterhin wird erfindungsgemäß die Exzenterschneckenpumpe in Form eines Permanentmagnet-Schrittmotors ausgelegt. Hierzu sind in den Rotor Permanentmagnete (Dauermagnete, z. B. aus Metallen der Gruppe der Seltenen Erden) integriert. Im Stator sind Spulen vorgesehen, welche entsprechend ihrer elektrischen Ansteuerung ein Magnetfeld erzeugen. Die Bewegung des Rotors erfolgt nun durch Ausrichtung der Permanentmagnete entsprechend dem durch die Spulen erzeugten Magnetfeld. Zu dieser Ansteuerung der Spulen ist eine optionale Steuereinheit vorgesehen, welche diese in einer Reihenfolge mit der entsprechenden Frequenz aktiviert, so dass sich die gewünschte Bewegung des Rotors ergibt.

Erfindungsgemäß verläuft das Maximum des magnetischen Flusses durch diejenigen Stellen des Rotors, welche in Kontakt mit dem Stator stehen. Bei einer typischen Exzenterschneckenpumpe mit zweigängigem oder auch dreigängigem Rotor verlaufen die Kontaktpunkte entlang einer schneckenförmigen Linie. Dementsprechend verläuft auch der magnetische Fluss senkrecht zu dieser schnekkenförmigen Linie.

Zur richtigen Ansteuerung der Spulen ist vorzugsweise ein Positionssensor vorgesehen, der die exakte Position des Rotors in Bezug auf den Stator signalisiert. Ein solcher Positionssensor kann beispielsweise auch aus bzw. mit Hilfe der in den Rotor integrierten Magnete realisiert werden.

In einer weiteren vorteilhaften Ausgestaltung der Erfindung ist die Exzenterschneckenpumpe in Form eines Asynchronmotors ausgelegt. Hierzu ist der Rotor als Widerstandsläufer bzw. vorzugsweise als Kurzschlussläufer ausgebildet. Weiterhin sind im Stator Wicklungen zur Erzeugung eines Drehfeldes vorgesehen. Durch das Drehfeld werden in den Rotorwicklungen bzw. in der leitenden Rotorstruktur Spannungen induziert, welche je nach dem elektrischen Widerstand der Wicklungen bzw. der leitenden Rotorstruktur zu entsprechenden Strömen führen. Diese Ströme verursachen wiederum ein Magnetfeld und damit ein Drehmoment. Zur Ansteuerung der Wicklungen ist eine optionale Steuerschaltung, vorteilhafterweise ein Frequenzumrichter, zur Erzeugung der phasenverschobenen Signale variabler Frequenz zur Erzeugung eines Drehfeldes mit der gewünschten Drehfrequenz vorgesehen.

Wahlweise können in dem Rotor Nuten zur Aufnahme von Rotorwicklungen vorgesehen sein.

Eine weitere vorteilhafte Ausgestaltung der Erfindung besteht darin, dass die Exzenterschneckenpumpe in Form eines Reluktanzmotors ausgeführt ist. Hierzu weist der Stator Spulen zur Erzeugung eines drehenden Magnetfeldes auf. Im Rotor befindet sich ein vorzugsweise zahnförmig ausgebildetes Teil aus magnetisch leitfähigem bzw. weichmagnetischem Material, wie beispielsweise Eisen. Hierbei richten sich die Zähne entsprechend dem Magnetfeld aus. Durch eine Drehung des Magnetfeldes kann somit auch eine Drehung des Rotors erreicht werden.

In einer weiteren vorteilhaften Ausgestaltung der Erfindung sind die magnetischen Komponenten bzw. Permanentmagnete im Rotor sowie die Spulen im Stator derart angeordnet, dass eine vorgegebene Kraft in axialer Richtung auf den Rotor ausgeübt wird. Besonders günstig ist es, wenn die Permanentmagnete bzw. Spulen in Gruppen angeordnet sind. Weisen nun die einzelnen Gruppen unterschiedliche Richtungen der Axialkräfte auf, so können sich diese vollständig oder zumindest überwiegend kompensieren. Besonders vorteilhaft ist es, wenn die axiale Kraft mit gleicher Stärke dem Pumpendruck entgegenwirkt. Zur Überwachung d Rotorposition wird vorzugsweise ein Lageregler eingesetzt, der die Position des Rotors mit Hilfe wenigstens eines Positionssensors steuert.

Eine weitere Ausgestaltung der Erfindung sieht einen Rotor vor, der durch die axiale Kraft in Axialrichtung verschiebbar ist. Durch eine solche Verschiebbarkeit kann die Verringerung des Losbrechmoments beim Pumpenanlauf erreicht werden. Ebenso kann dadurch beispielsweise der Pumpenauslass durch den Rotor selbst verschlossen werden. Alternativ kann selbstverständlich auch durch die axiale Bewegung des Rotors ein Ventilkörper betätigt werden. Dies ermöglicht insbesondere bei Dosierpumpen eine besonders feine und nachlauffreie Dosierung.

In einer weiteren vorteilhaften Ausgestaltung der Erfindung sind Spulen im Stator entgegengesetzt zu den Spulen gepolt, die das Drehmoment auf den Rotor übertragen. Durch diese steuerbare Umkehrpolung wird im Rotor eine Kraft erzeugt, die entgegen der Strömungsrichtung des gepumpten Mediums wirkt und damit die vom Medium erzeugten hydraulischen Kräfte auf die Stirnseiten des Rotors kompensiert oder reduziert. Die notwendige Anzahl der umgekehrt gepolten Spulen kann dem erzeugten Förderdruck variabel angepaßt werden.

In einer weiteren vorteilhaften Ausgestaltung der Erfindung weist der Rotor Permanentmagnete auf. Zusätzlich ist um den feststehenden Stator der Pumpe ein drehender Läufer angeordnet. Dieser Läufer wird beispielsweise von einem Elektromotor angetrieben oder ist selbst Bestandteil eines Elektromotors. Weiterhin weist der Läufer Mittel zur Erzeugung von Magnetfeldern auf. Dies können beispielsweise Permanentmagnete oder auch Spulen sein. Durch die Drehung des Läufers wird ein drehendes Magnetfeld erzeugt, welches im Eingriff mit dem Feld der Permanentmagnete des Rotors auf den Rotor ein Drehmoment ausübt.

In einer anderen Ausgestaltung der Erfindung sind die Spulen des Stators derart ausgelegt, dass der Feldstärkevektor neben einer zeitlich um die Rotorachse drehenden Komponente auch eine längs zur Rotorachse verschiebbare Komponente aufweist. Bei Schneckenpumpen und insbesondere bei Exzenterschneckenpumpen wandert der Kontaktpunkt bzw. die Kontaktpunkte des Rotors mit dem Stator entsprechend der Drehung des Rotors relativ zum Stator in einer schraubenförmigen Bewegung. Um nun zur Bewegung des Rotors den maximalen magnetischen Fluss bei hohem Wirkungsgrad zu erreichen, wird das Magnetfeld des Stators entsprechend der Bewegung der Kontaktpunkte mitbewegt. Dies kann durch eine geeignete Spulenanordnung entlang der Bahn der Bewegung bzw. durch eine entsprechende sequenzielle Ansteuerung mehrerer in Längsrichtung der Spulen angeordneter Spulensätze erreicht werden.

Erfindungsgemäß weist ein Rotor einer Exzenterschnekkenpumpe weichmagnetische Teile und/oder Mittel zur Erzeugung magnetischer Felder, wie beispielsweise Permanentmagnete oder Spulen, auf. Unter Einwirkung eines rotierenden externen Magnetfeldes wird ein Drehmoment zur Bewegung der Pumpe auf den Rotor ausgeübt.

Ein erfindungsgemäßes Verfahren zum Betrieb einer Exzenterschneckenpumpe, deren Rotor weichmagnetische Komponenten und/oder Mittel zur Erzeugung magnetischer Felder, wie beispielsweise Permanentmagnete oder Spulen enthält, besteht darin, dass der Rotor mit drehenden magnetischen Feldern beaufschlagt wird. Hierdurch ergibt sich durch Interaktion der Magnetfelder ein Drehmoment auf den Rotor.

In einer vorteilhaften Weiterbildung dieses Verfahrens können zusätzliche Bewegungen der magnetischen Felder in Richtung der Längsachse der Pumpe ausgeführt werden. Damit wird ein Wandern des Anlagepunktes zwischen Rotor und Stator der Exzenterschneckenpumpe mit berücksichtigt.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Die Fig. 1a, b, c zeigen in allgemeiner Form schematisch eine erfindungsgemäße Vorrichtung mit Permanentmagneten im Rotor und Spulen im Stator.
Fig. 2 zeigt in allgemeiner Form eine erfindungsgemäße Vorrichtung im seitlichen Schnitt.
Fig. 3 zeigt schematisch den Verlauf des magnetischen Flusses in einer Ausführung der Erfindung mit einem Rotor als Kurzschlussläufer.

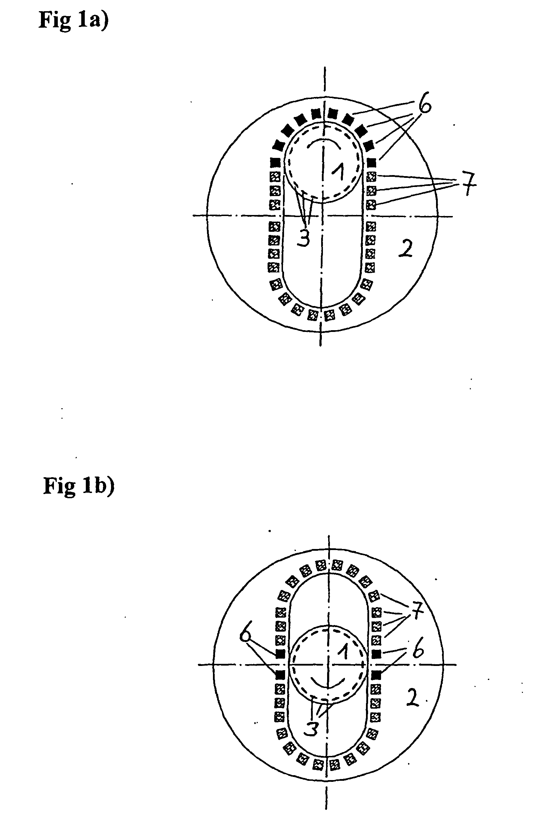

In Fig. 1a bis 1c ist eine erfindungsgemäße Vorrichtung schematisch in einem Schnitt senkrecht zur Drehachse dargestellt. Eine Exzenterschneckenpumpe weist einen Rotor (1) auf, welcher sich in einem Stator (2) bewegt. Der Rotor (1) enthält Permanentmagnete (3) zur Erzeugung eines Magnetfeldes. Im Stator (2) sind Spulen zur Erzeugung eines zweiten Magnetfeldes vorgesehen. Diese Spulen sind durch eine Steuereinheit wahlweise mit Strom versorgbar. Die mit Strom durchflossenen Spulen (6) sind dunkel dargestellt, während die stromlosen Spulen (7) hell dargestellt sind.

Die einzelnen Teilabbildungen zeigen unterschiedliche Stadien im Bewegungsablauf. So befindet sich in einem ersten Stadium entsprechend Fig. 1a das in der Schnittebene befindliche Teil des Rotors am oberen Ende des schraubenförmig gewundenen Ganges des Stators, welches hier im Schnitt als ein Oval dargestellt ist. Entsprechend werden die möglichst nahe am Rotor anliegenden oberen Spulen mit Strom versorgt. Die Richtung des Stromes ist so gewählt, dass sich im Eingriff mit den Permanentmagneten im Rotor ein Drehmoment zur Bewegung des Rotors ergibt.

In einem späteren Stadium der Bewegung, dargestellt in Fig. 1b, bei dem sich das in der Schnittebene befindliche Segment des Rotors in der Mitte des Stators befindet, werden nur die entsprechend seitlich angeordneten Spulen aktiviert.

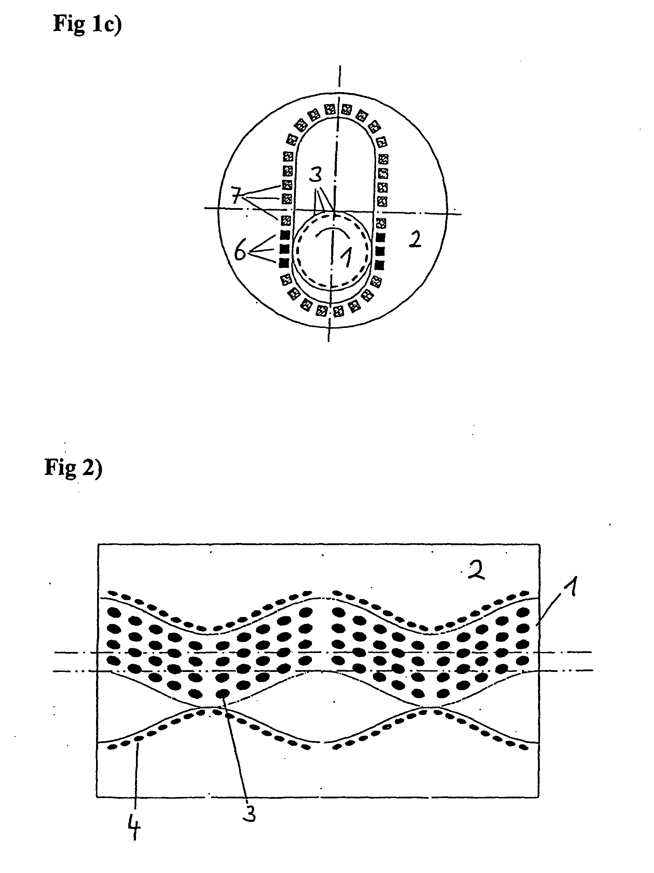

Bei fortgeschrittener Bewegung entsprechend Fig. 1c werden nun weitere, seitlich am Rotor anliegende Magnete aktiviert.

Zur richtigen Ansteuerung der Spulen ist vorzugsweise ein Positionssensor vorgesehen, der die exakte Position des Rotors in Bezug auf den Stator signalisiert. Ein solcher Positionssensor kann beispielsweise auch durch die bzw. mit Hilfe der in den Rotor integrierten Magnete realisiert werden.

Diese Darstellung ist lediglich ein Schnitt an einer Stelle des Rotors. Der gesamte Rotor setzt sich aus einer Vielzahl solcher Schnitte zusammen, welche jeweils um einen Winkel gegeneinander verdreht sind. Daher verlaufen die Spulen auch nicht parallel zur Pumpenachse, sondern sind vorzugsweise in einer Kurve, entsprechend der Bewegung des Rotors, entlang der Oberfläche des Stators angeordnet. Ebenso können im Falle von geradlinig angeordneten Spulen auch die Magnete gegeneinander versetzt angeordnet werden.

Fig. 2 stellt eine erfindungsgemäße Vorrichtung mit einem Schnitt in einer Ebene parallel zur Pumpenachse dar. Diese Zeichnung korrespondiert mit Figur 1a und zeigt die Darstellung daraus in einem um 90 Grad versetzten Schnittwinkel. In Fig. 2 sind wieder der Stator (2) sowie der darin laufende Rotor (1) zu erkennen. Das Drehmoment auf den Rotor wird erzeugt durch Interaktion der Magnetfelder der Spulen (4) im Stator und der Permanentmagnete (3) im Rotor.

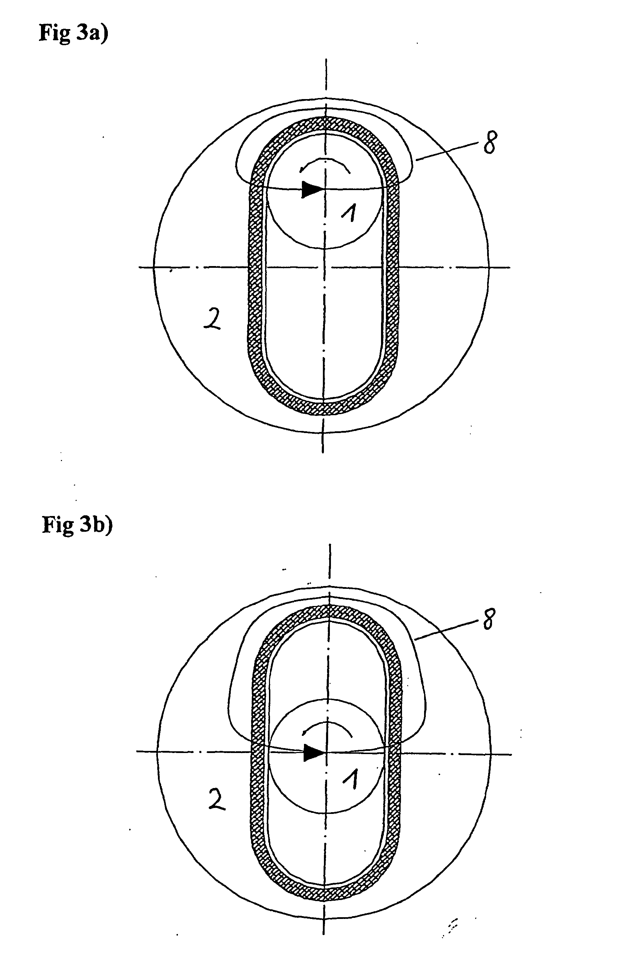

In Fig. 3a und 3b ist zur Veranschaulichung noch eine Ausführung der Erfindung mit einem Rotor als Kurzschlussläufer dargestellt. Der Rotor (1) wandert in der Schnittdarstellung entsprechend seiner Drehbewegung im Stator (2). Die Linie (8) gibt den Verlauf des magnetischen Flusses des Magnetfeldes der Spule an. Dieser magnetische Fluss geht bevorzugt durch den magnetisch leitfähigen Rotor. Entsprechend verläuft die Linie des magnetischen Flusses abhängig von der Position des Rotors.

## Patentansprüche

1. Exzenterschneckenpumpe, mit einem Stator (2) und einem Rotor (1), wobei der Stator (2) als Stator eines Elektromotors ausgebildet ist und der Rotor (1) als Läufer eines Elektromotors ausgebildet ist und im Rotor (1) Permanentmagnete (3) und weiterhin im Stator (2) Spulen (4) vorgesehen sind, welche entsprechend ihrer elektrischen Ansteuerung eine Kraft auf die Permanentmagnete im Rotor (1) zur Drehung des Rotors (1) ausüben
**dadurch gekennzeichnet, daß**
der von der stromdurchflossenen Spulen (4) erzeugte magnetische fluß an der Stellen maximal ist, an denen der Rotor in Kontakt mit den Stator steht, und **daß**
die Spulen (4) im Stator (2) sowie die Permanentmagnete (3) im Rotor (1) derart angeordnet und in einer Weise von Strom durchflossen sind, daß das Maximum des von den Strom durchflossenen Spulen (4) erzeugten magnetischen Flusses entlang einer schneckenförmigen Linie verläuft.

2. Exzenterschneckenpumpe nach einem der vorhergehenden Ansprüche,
**dadurch gekennzeichnet, dass**
auf den Rotor (1) eine magnetische Axialkraft ausgeübt wird.

3. Exzenterschneckenpumpe nach einem der vorhergehenden Ansprüche,
**dadurch gekennzeichnet, dass**
die auf den Rotor (1) einwirkenden Axialkräfte des Pumpendrucks vollständig oder zumindest überwiegend von den Axialkräften der Gruppen von Permanentmagneten (3) und/oder Spulen (4) kompensiert werden.

4. Exzenterschneckenpumpe nach einem der vorhergehenden Ansprüche,
**dadurch gekennzeichnet, dass**
die Axialkraft der durch den Pumpendruck auf den Rotor wirkenden Kraft entspricht, so dass die Lagerung in Axialrichtung reduziert werden oder sogar entfallen kann.

5. Exzenterschneckenpumpe nach einem der vorhergehenden Ansprüche,
**dadurch gekennzeichnet, dass**
der Rotor durch die Axialkraft in axialer Richtung verschiebbar ist.

6. Exzenterschneckenpumpe nach einem der vorhergehenden Ansprüche,
**dadurch gekennzeichnet, dass**
zur Verringerung des Losbrechmoments beim Pumpenanlauf eine zusätzliche Axialkraft ausgeübt und/oder eine zusätzliche Axialbewegung ausgeführt wird.

7. Exzenterschneckenpumpe nach einem der vorhergehenden Ansprüche,
**dadurch gekennzeichnet, dass**
eine zusätzliche Axialbewegung zum Verschluss des Pumpenauslasses oder zur Betätigung eines Ventilkörpers eingesetzt wird.

8. Rotor einer Exzenterschneckenpumpe nach Anspruch 1,
**dadurch gekennzeichnet, dass**
im Körper des Rotors (1) Permanentmagnete sowie wahlweise weichmagnetische Materialien zur Ausübung eines Drehmoments mittels externer Magnetfelder vorgesehen sind.

9. Stator einer Exzenterschneckenpumpe nach Anspruch 1,
**dadurch gekennzeichnet, dass**
im Stator (2) Spulen (4) ein Drehfeld erzeugen dessen Feldstärkevektor neben einer zeitlich um die Pumpenachse drehbaren Komponente auch eine proportional zur Drehung entlang der Pumpenachse verschiebbare Komponente aufweist.

## Claims

1. An eccentric screw pump, with a stator (2) and a rotor (1), wherein the stator (2) is designed as a stator of an electric motor and the rotor (1) is designed as an armature of an electric motor and there are provided in the rotor (1) permanent magnets (3) and furthermore in the stator (2) coils (4), which according to their electrical activation exert a force on the permanent magnets in the rotor (1) for the rotation of the rotor (1)
**characterised in that**
the magnetic flux generated by the coils (4) through which current is flowing is at a maximum at the points at which the rotor is in contact with the stator, and that
the coils (4) are disposed in the stator (2) and the permanent magnets (3) are disposed in the rotor (1) in such a way and a current is passed through the same in such a way that the maximum of the magnetic flux generated by the coils (4) through which current is flowing runs along a helical line.

2. The eccentric screw pump according to claim 1,
**characterised in that**
a magnetic axial force is exerted on the rotor (1) .

3. The eccentric screw pump according to any one of the preceding claims,
**characterised in that**
the axial forces of the pump pressure acting on the rotor (1) are compensated for completely or at least predominantly by the axial forces of the groups of permanent magnets (3) and/or coils (4).

4. The eccentric screw pump according to any one of the preceding claims,
**characterised in that**
the axial force corresponds to the force acting on the rotor due to the pump pressure, so that the bearing in the axial direction can be reduced or even dispensed with.

5. The eccentric screw pump according to any one of the preceding claims,
**characterised in that**
the rotor is displaceable in the axial direction by the axial force.

6. The eccentric screw pump according to any one of the preceding claims,
**characterised in that**,
in order to reduce the initial braking torque at the pump start-up, an additional axial force is exerted and/or an additional axial movement is performed.

7. The eccentric screw pump according to any one of the preceding claims,
**characterised in that**
an additional axial movement is used for the closure of the pump outlet or for the actuation of a valve body.

8. A rotor of an eccentric screw pump according to claim 1,
**characterised in that**
there are provided, in the body of the rotor (1), permanent magnets and optionally soft magnetic materials for exerting a torque by means of external magnetic fields.

9. A stator of an eccentric screw pump according to claim 1,
**characterised in that**,
in the stator (2), coils (4) generate a rotary field, whose field strength vector comprises, apart from a component rotatable in time about the pump axis, also a component displaceable along the pump axis proportional to the rotation.

## Revendications

1. Pompe à vis excentrique comprenant un stator (2) et un rotor (1), le stator (2) étant réalisé comme un stator d'un moteur électrique, et le rotor (1) comme un rotor d'un moteur électrique et des aimants permanents (3) étant prévus dans le rotor (1) et en outre dans le stator (2) des bobines (4) qui en fonction de leur commande électrique exercent une force sur les aimants permanents dans le rotor (1) pour la rotation du rotor (1)
**caractérisée**
**en ce que** le flux magnétique généré par les bobines (4) est au maximum aux endroits où le rotor est contact avec le stator et
**en ce que** les bobines (4) sont disposées dans le stator (2) et les aimants permanents (3) dans le rotor (1) et sont traversés par le courant de sorte que le maximum du flux magnétique généré par les bobines (4) traversées par le courant s'étend le long d'une ligne hélicoïdale.

2. Pompe à vis excentrique selon la revendication 1, **caractérisée en ce qu'**une force magnétique axiale est exercée sur le rotor (1).

3. Pompe à vis excentrique selon l'une des revendications précédentes,
**caractérisée en ce que**
les forces axiales agissant sur le rotor (1) de la pression de pompe sont compensées complètement ou au moins en grande partie par les forces axiales des groupes d'aimants permanents (3) et/ou des bobines (4).

4. Pompe à vis excentrique selon l'une des revendications précédentes,
**caractérisée en ce que**
la force axiale correspond à la force agissant sur le rotor par la pression de pompe, de sorte que le logement dans le sens axial est réduit voir supprimé.

5. Pompe à vis excentrique selon l'une des revendications précédentes,
**caractérisée en ce que**
le rotor est coulissant dans le sens axial sous l'action de la force axiale.

6. Pompe à vis excentrique selon l'une des revendications précédentes,
**caractérisée en ce que**
pour la diminution du moment d'inertie lors du démarrage de la pompe, une force axiale supplémentaire est exercée et/ou un mouvement axial supplémentaire est effectué.

7. Pompe à vis excentrique selon l'une des revendications précédentes,
**caractérisée**
**en ce qu'**un mouvement axial supplémentaire est utilisé pour la fermeture de la sortie de la pompe ou pour l'actionnement d'un corps de vanne.

8. Rotor d'une pompe à vis excentrique selon la revendication 1,
**caractérisée**
**en ce qu'**il est prévu dans le corps du rotor (1) des aimants permanents ainsi qu'au choix des matériaux aimantés doux pour exercer un couple de rotation au moyen de champs magnétiques externes.

9. Stator d'une pompe à vis excentrique selon la revendication 1,
**caractérisée**
**en ce que** dans le stator (2), des bobines (4) génèrent un champ rotatif dont le vecteur d'intensité de champ présentent outre une composante rotative dans le temps autour de l'axe de pompe également ou composante coulissante proportionnellement à la rotation le long de l'axe de pompe.
